# FASCICULE DE BREVET EUROPEEN

(11) **EP 2 167 223 B1**
(45) Date de publication et mention de la délivrance du brevet: **12.10.2011**
(21) Numéro de dépôt: 08826793.5
(22) Date de dépôt: 27.06.2008
(51) Int. Cl.: B01D 61/44, C25D 7/06, C25D 17/12, C25D 21/14, C25D 21/22, C25D 5/02, C25D 3/30, C25D 19/00

(54) **INSTALLATION ET PROCEDE POUR L'ETAMAGE ELECTROLY TIQUE DE BANDES D' ACIER**
EINHEIT UND VERFAHREN ZUR ELEKTROLYTISCHEN VERZINNUNG VON STAHLBÄNDERN
UNIT AND METHOD FOR THE ELECTROLYTIC TINNING OF STEEL STRIPS

(30) Priorité: 12.07.2007 FR 0705069
(43) Date de publication de la demande: 31.03.2010
(73) Titulaire: Siemens VAI Metals Technologies SAS, 42403 Saint-Chamond (FR)
(72) Inventeur: BARBIERI, Philippe, F-69003 Lyon (FR)
(74) Mandataire: Fischer, Michael
(86) Numéro de dépôt international: PCT/FR2008/000912
(87) Numéro de publication internationale: WO 2009/016291

(56) Documents cités:
- EP-A- 1 091 025
- JP-A- 6 158 397
- US-A- 5 194 141
- US-B1- 6 251 255

## Description

L'invention concerne de manière générale l'étamage électrolytique à anode insoluble de bandes d'acier, et plus particulièrement un procédé d'étamage électrolytique à anode insoluble, l'installation pour sa mise en oeuvre et un module pour la récupération d'acide du bain électrolytique.

L'absence de toxicité de l'étain et l'excellente protection contre la corrosion qu'il apporte à l'acier ont depuis longtemps conduit à l'utilisation d'acier doux étamé dans le domaine de l'emballage alimentaire où il est connu sous le nom de « fer blanc ». La fabrication du fer blanc est généralement réalisée à partir de bobines (« coils ») d'acier doux ou ultra-doux, qui subissent préalablement une opération de laminage à chaud, suivie d'une opération de laminage à froid. A l'issue de ces opérations de laminage, on obtient des bandes d'acier de quelques dixièmes de millimètres d'épaisseur. Ces bandes sont ensuite recuites, skin passées, dégraissées, décapées puis étamées selon un procédé d'étamage électrolytique (ou encore « électro-étamage »). L'étamage est typiquement suivi d'opérations de finition telles que la refusion du revêtement, la passivation, et l'huilage.

L'électro-étamage est un procédé d'électrodéposition de l'étain sur un substrat métallique, qui consiste à établir le transfert d'ions stanneux Sn²⁺ vers la bande à revêtir suivant l'équilibre :

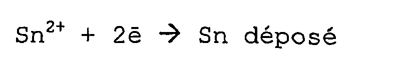

Cette réaction implique la disponibilité d'ions stanneux dans le bain. Outre ces ions stanneux, le bain comporte un acide destiné à abaisser le pH et à augmenter la conductivité électrique. Il comporte aussi des additifs qui concourent, entre autre, à stabiliser les ions stanneux en les empêchant de s'oxyder, et d'éviter la formation de boues d'oxydes stanniques causées par l'oxydation de ces ions stanneux.

Il existe deux grandes catégories de procédés d'électro-étamage: la première catégorie de procédés regroupe les procédés mettant en oeuvre une anode soluble, ou procédés dits « à anode soluble », et la deuxième catégorie de procédés regroupe les procédés mettant en oeuvre une anode insoluble, ou procédés dits « à anode insoluble ».

Les procédés d'électro-étamage dits « à anode soluble » sont mis en oeuvre dans des installations d'étamage électrolytique qui font majoritairement appel à des anodes en étain de haute pureté (c'est-à-dire à des anodes comprenant au moins 99,85% en poids d'étain), qui se dissolvent au cours de l'électrolyse et chargent le bain en ions stanneux Sn²⁺.

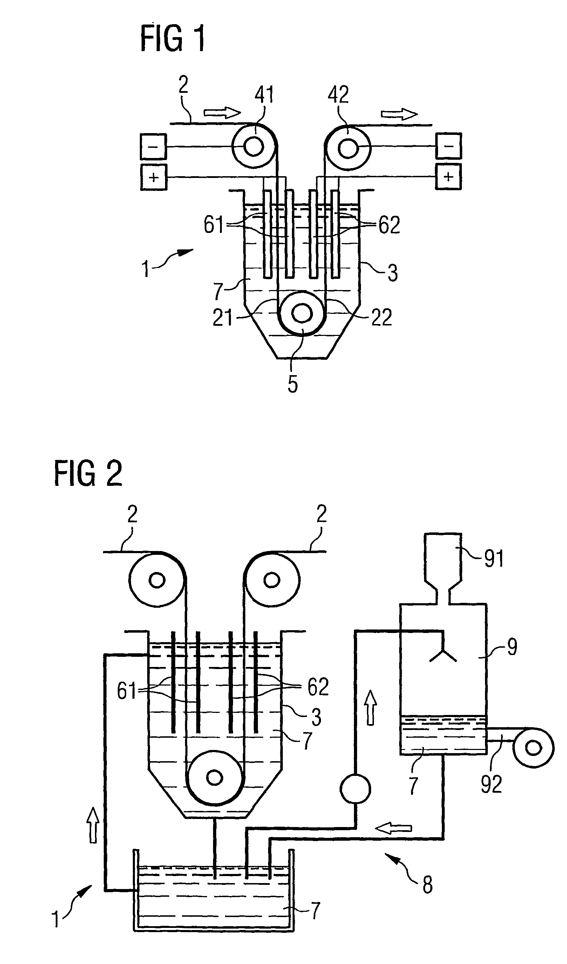

Un exemple d'installation d'électro-étamage « à anode soluble » connue de l'homme de l'art est représenté sur la figure 1. Il s'agit d'une installation d'électro-étamage 1 verticale, dans laquelle une bande à revêtir 2 plonge dans un bac de revêtement 3 (ou encore bac d'électro-déposition) en s'enroulant sur deux rouleaux conducteurs 41, 42 et un rouleau de fond 5, formant ainsi un brin descendant 21 et un brin montant 22. Les deux rouleaux conducteurs 41, 42 alimentent la bande 2 en courant électrique. Les anodes solubles en étain 61, 62 sont disposées de part et d'autre des brins descendant 21 et montant 22 de la bande d'acier 2 à revêtir. Cette bande d'acier 2 est reliée au pôle négatif (représenté par le symbole " - " sur la figure 1) d'un générateur de courant électrique (non représenté sur la figure 1) et constitue ainsi la cathode, et les anodes solubles 61, 62 sont reliées au pôle positif (représenté par le symbole "+" sur la figure 1) de ce générateur, constituant ainsi l'anode. Les anodes 61, 62 et les brins descendant 21 et montant 22 de la bande d'acier 2 sont immergés partiellement dans une solution électrolytique 7 (ou électrolyte).

Il existe plusieurs procédés d'électro-étamage « à anode soluble », qui diffèrent les uns des autres en fonction de l'électrolyte utilisé. Mais, dans tous les procédés d'électro-étamage « à anode soluble », le revêtement électrolytique d'étain de la bande d'acier 2 se déroule selon les réactions suivante :
■ à la cathode : SnA₂ + 2e⁻ → Sn + 2A⁻
■ à l'anode : Sn + 2A⁻ → SnA₂ + 2e⁻

Dans les procédés d'électro-étamage dits « à anode insoluble », on remplace l'anode en étain par une anode non soluble, par exemple une anode en titane avec un revêtement d'un métal (par exemple un métal de la famille du platine) ou d'un oxyde métallique. Dans ce type de procédé, les ions d'étain nécessaires au revêtement sont, dans ce cas, issus du bain d'électrolyte lui-même sous la forme d'un composé de formule SnA₂, A étant un radical acide. Les réactions se déroulant à l'anode et à la cathode sont évidemment différentes :
■ à la cathode : SnA₂ + 2e⁻ → Sn + 2A⁻
■ à l'anode : H₂O → ½ O₂ + 2H⁺ + 2e⁻

Les procédés d'électro-étamage dits « à anode insoluble » se distinguent donc de ceux dits « à anode soluble » en ce qu'ils conduisent à la formation d'acide dans le bain électrolytique corrélativement à son appauvrissement en étain. Ces modifications continues nécessitent donc une régénération, elle aussi continue du bain.

L'homme de l'art connaît des procédés d'électro-étamage « à anode insoluble » dans lesquels une partie de l'électrolyte est mis en recirculation en vue de la régénération en continu du bain électrolytique. Ainsi, par exemple, le brevet américain US 4,181,580 décrit une installation d'électro-étamage illustrée sur la figure 2, qui met en oeuvre des anodes non solubles 61, 62, un circuit de recirculation 8 de l'électrolyte 7, et un réacteur à lit fluidisé 9, dans lequel sont introduits l'électrolyte 7, des granulats d'étain 91, et un courant gazeux 92 riche en oxygène. Ce procédé présente toutefois l'inconvénient d'induire la formation d'ions d'étain quadrivalents selon les réactions :

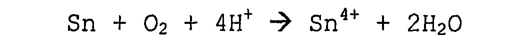

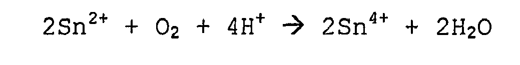

Ces ions Sn⁴⁺ se précipitent sous forme de boues qui nécessitent d'être régulièrement récupérées, ce qui diminue fortement l'intérêt d'un tel procédé.

Dans toutes les installations d'électro-étamage mettant en oeuvre des anodes insolubles, il est nécessaire de faire appel à des installations de dissolution d'étain pour produire des ions stanneux Sn²⁺ dans le bain. Ces installations de dissolution d'étain peuvent être par une installation du type réacteur à lit fluidisé, comme celle décrite dans le brevet US 4,181,580, ou bien un réacteur d'électrodissolution électrique de l'étain, comme celui décrit dans la demande de brevet japonais JP 07268697. Dans ce type d'installation d'électro-étamage, il est par ailleurs nécessaire de mettre en oeuvre des moyens externes au bac de revêtement et à l'installation de dissolution d'étain pour maintenir la teneur en acide constante dans le bac d'électrodéposition, ce qui nécessite des installations complexes et coûteuses.

Par extension, US6251255B1 présente un procédé d'électroétamage d'un objet statique dans un bac d'électrodéposition rempli d'une solution électrolytique qui comprend un acide et des ions stanneux Sn²⁺ sous forme d'un composé SnA₂ avec A désignant un anion acide, le composé SnA₂ provenant d'un réacteur d'électrodissolution d'étain, ledit procédé d'étamage mettant en oeuvre une anode non soluble et l'objet constituant une cathode qui sont immergées dans la solution électrolytique et entre lesquelles on applique une différence de potentiel, caractérisé en ce que l'on maintient constante la concentration en acide AH dans la solution électrolytique du bac en réalisant l'étape suivante : on fournit un réacteur d'électrodissolution d'étain (10) qui comprend une cathode insoluble et une anode d'étain (160), entre lesquelles on applique une différence de potentiel, l'anode d'étain et la cathode insoluble étant séparées par une membrane anionique d'électrodialyse ou d'électrolyse qui définit une zone cathodique intégrant la cathode insoluble et une zone anodique intégrant l'anode d'étain, le composé SnA₂ provenant de la zone anodique du réacteur d'électrodissolution d'étain. Ce procédé pour maintenir constante la concentration en acide AH dans la solution électrolytique a toutefois ses limites dans une application plus dynamique telle que celle de l'électroétamage d'une bande en défilement dynamique continu, car en particulier, les problèmes de concentration en acide et en ion stanneux évoqués précédemment y persistent.

La présente invention a donc pour objet un procédé d'électro-étamage et une installation pour sa mise en oeuvre qui remédient aux inconvénients de l'art antérieur, sans faire appel à des moyens externes au bac de revêtement et au dispositif de dissolution d'étain.

Plus particulièrement, la présente invention a pour objet un procédé d'étamage électrolytique d'une bande d'acier en défilement continu dans au moins un bac d'électrodéposition rempli d'une solution électrolytique qui comprend un acide AH et des ions stanneux Sn²⁺ sous forme d'un composé SnA₂ avec A désignant un anion acide, le composé SnA₂ provenant d'un réacteur d'électrodissolution d'étain, ce procédé d'étamage mettant en oeuvre une anode non soluble et la bande métallique constituant une cathode qui sont immergées dans la solution électrolytique et entre lesquelles on applique une différence de potentiel de manière que le revêtement électrolytique d'étain de la bande métallique à étamer se déroule selon les réactions suivante :
- à l'anode : 2H₂O → O₂ + 4 H⁺ + 4 e⁻,
- à la cathode : SnA₂ + 2 e⁻ → Sn + 2A⁻.

Selon l'invention, on maintient constante la concentration en acide AH dans la solution électrolytique du bac de revêtement en réalisant les étapes suivante :
a) on dispose dans le bain électrolytique du bac d'électrodéposition une membrane anionique entre la bande métallique et l'anode insoluble, cette membrane anionique étant composé dans un module amovible de récupération d'acide au voisinage de l'anode insoluble et définissant un compartiment anodique comprenant l'anode insoluble et un compartiment cathodique comprenant la bande métallique immergée ;
b) on fournit un réacteur d'électrodissolution d'étain qui comprend une cathode insoluble et une anode d'étain, entre lesquelles on applique une différence de potentiel, l'anode d'étain et la cathode insoluble étant séparées par une membrane anionique d'électrodialyse ou d'électrolyse qui définit une zone cathodique intégrant la cathode insoluble et une zone anodique intégrant l'anode d'étain, le composé SnA₂ provenant de la zone anodique du réacteur d'électrodissolution d'étain, de sorte que seuls les ions A⁻ qui se forment à la cathode puissent transiter à travers la membrane d'électrodialyse (ou d'électrolyse) ;
c) on met en circulation une partie de la solution électrolytique enrichie en acide AH entre le compartiment anodique du bac d'électrodéposition et la zone cathodique du réacteur d'électrodissolution d'étain.

La présence d'une membrane anionique disposée entre la bande métallique à étamer et l'anode insoluble dans le bac d'électrodéposition permet aux ions A⁻ libérés à la cathode de transiter à travers la membrane anionique du compartiment cathodique vers le compartiment anodique, et aux ions H+ d'être retenus dans le compartiment anodique, de sorte que l'on a formation d'acide AH dans la solution électrolytique contenue dans le compartiment anodique du bac d'électrodéposition.

Une partie de la solution électrolytique du bain d'électrodéposition étant mise en circulation entre le compartiment anodique du bac d'électrodéposition et la zone cathodique du réacteur d'électrodissolution d'étain, l'application d'une différence de potentiel entre les électrodes du réacteur d'électrodissolution d'étain (anode soluble d'étain et cathode insoluble) conduit à la formation d'ion stanneux Sn²⁺ dans la zone anodique et d'ions A⁻ et H⁺ dans la zone cathodique. La présence d'une membrane anionique d'électrodialyse (ou électrolyse) séparant ces zones anodique et cathodique permet aux ions A⁻ de transiter à travers cette membrane, de la zone cathodique vers la zone anodique, les ions H⁺ se transformant en hydrogène au voisinage de la cathode et les ions stanneux Sn²⁺ restant très majoritairement dans la zone anodique, conduisant ainsi à la formation du composé SnA₂ dans la zone anodique du réacteur d'électrodissolution.

L'acide AH est avantageusement choisi parmi les acides sulfoniques.

A titre d'acides sulfoniques utilisables selon la présente invention, on peut notamment citer l'acide méthane-sulfonique et l'acide phénol-sulfonique.

L'acide sulfonique préféré est le méthane-sulfonique.

Si l'on utilise un acide sulfonique, et notamment un acide choisi parmi l'acide méthane-sulfonique et l'acide phénol-sulfonique, le composé SnA₂ sera donc avantageusement un sulfonate d'étain, et notamment un sulfonate d'étain correspondant aux acides sulfoniques préférés selon l'invention : phénol sulfonate d'étain ou méthane-sulfonate d'étain.

Avantageusement, on cherche également à maintenir constante la concentration en ions stanneux Sn²⁺ dans la solution électrolytique du bac de revêtement par mise en circulation de la solution électrolytique entre le compartiment cathodique du bac d'électrodéposition et la zone anodique du réacteur d'électrodissolution d'étain.

Le procédé selon l'invention présente l'avantage d'assurer une teneur en acide AH constante dans le bain, et le cas échéant une teneur constante en ions stanneux Sn²⁺, sans mettre en oeuvre des moyens extérieurs au bac d'électrodéposition et au réacteur d'électrodissolution d'étain, ce qui permet de diminuer considérablement le coût du procédé d'étamage.

Selon la présente invention, on utilise un module amovible pour la récupération d'acide au voisinage de l'anode insoluble, comprenant une membrane anionique et un châssis pour supporter la membrane, le châssis étant réalisé en un matériau non conducteur de l'électricité.

Le matériau constitutif du châssis peut être un matériau plastique ou un matériau composite tel qu'une résine polyester armée ou un acier revêtu d'un polymère.

Selon un premier mode de réalisation du module de récupération selon l'invention, celui-ci comprend en outre une anode insoluble et se présente sous forme d'une cassette plate comprenant :
■ la membrane anionique et l'anode se présentant sous forme de feuilles, et
■ deux faces principales, l'une de ces faces étant une face active munie de la membrane anionique, l'anode étant disposée dans la cassette derrière la membrane anionique.

Dans cette configuration du module de récupération, la membrane anionique peut être avantageusement maintenue dans le châssis du module de récupération par un treillis ou un filet de rigidité, qui est typiquement réalisé en matière plastique.

La face active de la cassette est soit complètement ouverte, soit pourvue d'une pluralité d'ouvertures de plus petites dimensions que les faces principales de la cassette, de manière que la membrane anionique soit en contact avec la solution électrolytique lorsque le module de récupération est installé dans le bac d'électrodéposition.

Selon un second mode de réalisation du module de récupération selon l'invention, seule la membrane anionique est intégrée dans le module de récupération. Dans une telle configuration, la membrane anionique se présente sous forme d'une feuille et le châssis du module de récupération se présente sous forme d'un U à deux branches, la membrane anionique (MA) étant intégrée dans l'une des branches. Dans ce mode de réalisation, la membrane est également maintenue par un treillis en matière plastique avec des ouvertures pratiquées sur la face active de la branche contenant la membrane.

Enfin, la présente invention a encore pour objet une installation pour l'étamage électrolytique d'une bande d'acier en défilement continu, qui comprend :
■ un bac d'électrodéposition rempli d'une solution électrolytique qui comprend un acide AH et des ions stanneux Sn²⁺ sous forme d'un composé SnA₂ avec A désignant une fonction acide, ce bac d'électrodéposition comprenant une anode non soluble immergée dans la solution électrolytique du bac d'électrodéposition et une cathode constituée par la bande métallique en défilement continu dans la solution électrolytique du bac d'électrodéposition, et
■ un réacteur d'électrodissolution d'étain caractérisée en ce que le bac d'électrodéposition comprend en outre une membrane anionique disposée dans le bain électrolytique du bac d'électrodéposition entre la bande métallique et l'anode insoluble, étant composé dans un module amovible de récupération d'acide au voisinage de l'anode insoluble et définissant ainsi un compartiment anodique comprenant l'anode insoluble et un compartiment cathodique comprenant la bande métallique, et le réacteur d'électrodissolution d'étain, qui comprend une cathode insoluble et une anode d'étain soluble, l'anode d'étain et la cathode insoluble étant séparées par une membrane anionique d'électrodialyse ou d'électrolyse définissant une zone cathodique intégrant la cathode insoluble et une zone anodique intégrant l'anode d'étain, et
   également caractérisée en ce que l'installation d'étamage comprend en outre un circuit de recirculation de la solution électrolytique entre le compartiment anodique du bac d'électrodéposition et la zone cathodique du réacteur d'électrodissolution d'étain.

Le nombre de bacs de revêtement dans l'installation d'étamage selon l'invention dépend de la vitesse de défilement de la bande d'acier et de l'épaisseur de revêtement d'étain souhaitée.

L'acide AH et le composé SnA₂ sont tels que définis précédemment.

L'anode soluble en étain dans le réacteur d'électrodissolution d'étain peut se présenter sous forme d'une anode massive ou sous forme de granules d'étain disposés à l'intérieur d'un panier, dit « panier de dissolution d'étain ».

Avantageusement, l'installation selon la revendication comprend en outre un second circuit de recirculation de la solution électrolytique entre le compartiment cathodique du bac d'électrodéposition et la zone anodique du réacteur d'électrodissolution d'étain.

Selon un premier mode de réalisation de l'invention, la membrane anionique et l'anode insoluble du bac d'électrodéposition sont intégrés dans un même module de récupération, comme par exemple le premier mode de réalisation du module de récupération selon l'invention.

Selon un second mode de réalisation de l'installation selon l'invention, la membrane anionique (MA) est intégrée dans un module de récupération amovible indépendant de l'anode insoluble, qui entoure l'anode insoluble, comme par exemple le deuxième mode de réalisation du module de récupération selon l'invention. Une telle disposition permet le montage et le démontage de la membrane anionique et de son support (c'est-à-dire le châssis du module de récupération, indépendamment de l'anode qui dispose de ses propres moyens de supportage dans le bac d'électrodéposition de sorte que la réalisation du ou des (le cas échéant) circuits de recirculation de l'électrolyte dans l'installation d'étamage s'en trouve simplifiée.

D'autres caractéristiques avantageuses de l'invention apparaîtront dans la description suivante de certains modes de réalisation donnés à titre de simple exemple et représentés sur les dessins annexes :
- la figure 1 est un schéma de principe d'un exemple d'installation d'électro-étamage selon l'état de la technique,
- la figure 2 est un schéma de principe d'un autre exemple d'installation d'électro-étamage selon l'état de la technique,
- la figure 3 est un schéma de principe d'un exemple d'installation d'électro-étamage selon l'invention,
- la figure 4 est un schéma de principe d'un autre exemple d'installation d'électro-étamage selon l'invention,
- la figure 5 représente un exemple de module de récupération selon l'invention,
- la figure 6 représente un autre exemple de module de récupération selon l'invention, disposé dans un bac d'électrodéposition.
- L'installation d'électro-étamage (ou installation d'étamage électrolytique) représentée sur la figure 1 est une installation d'électro-étamage 1 à anode soluble de l'état de la technique, qui a été précédemment décrite dans la référence à l'art antérieur qui précède.

L'installation d'électro-étamage (ou installation d'étamage électrolytique) représentée sur la figure 2 est une installation d'électro-étamage 1 à anode insoluble de l'état de la technique, qui a été précédemment décrite dans la référence à l'art antérieur qui précède.

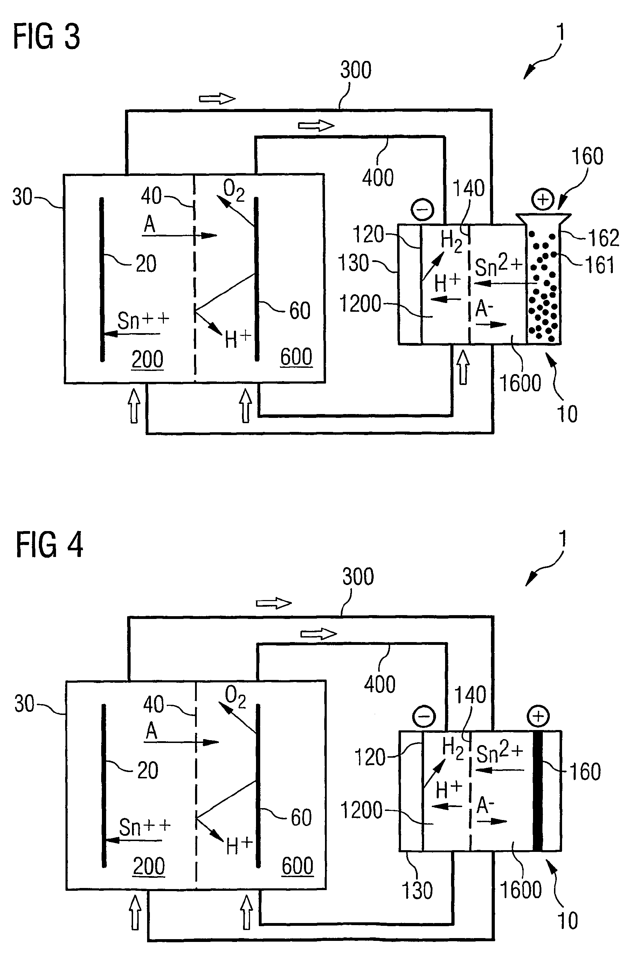

Les figures 3 et 4 sont des schémas de principe d'exemples d'installation selon l'invention dans lesquelles la bande à revêtir 20 et une anode insoluble 60 sont partiellement immergées dans un bac d'électrodéposition 30 (ou bac de revêtement) contenant un électrolyte avec des ions stanneux Sn²⁺ sous forme de composé SnA₂ et un acide AH, A étant un radical acide. Une membrane anionique 40 est disposée dans le bac d'électrodéposition 30 entre la bande à revêtir 20 et l'anode insoluble 60, définissant un compartiment anodique 600 comportant l'anode insoluble 60 et un compartiment cathodique 200 comportant la bande d'acier 20 à revêtir.

La membrane anionique 40 peut être avantageusement choisie parmi celles commercialisées par TOKUYAMA SODA, ASAHI, et SOLVAY sous les dénominations commerciales AHA, AMX, AHT, AKI, AW07, AW15 respectivement.

La membrane anionique 40 laisse les ions A-libérés à la cathode 20 transiter du compartiment cathodique 200 vers le compartiment anodique 600, tout en étant imperméable aux cations H⁺ et Sn²⁺. Les ions H⁺ restent dans le compartiment anodique 600 et on a donc formation d'acide AH dans la solution électrolytique contenue dans le compartiment anodique 600 du bac d'électrodéposition 30. Les ions Sn²⁺ restent dans le compartiment cathodique 200 et se déposent sous forme d'étain Sn sur la bande à revêtir 20.

Outre le bac de revêtement 30, les installations d'électro-étamage 1 représentées sur les figures 3 et 4 comprennent chacune un réacteur d'électrodissolution d'étain 10, qui est un réacteur analogue à celui décrit dans la demande de brevet japonais JP 07268697.

Le réacteur d'électrodissolution d'étain 10 comprend une cathode insoluble 120 et une anode soluble d'étain 160, qui sont immergées dans un réservoir 130 contenant la même solution électrolytique que le bac de revêtement 30. Une membrane anionique d'électrodialyse (ou électrolyse) 140 est disposée entre les électrodes 120, 160 du réacteur 10, de sorte que le réservoir 130 du réacteur 10 est divisé en une zone cathodique 1200 contenant la cathode insoluble 120 et une zone anodique 1600 contenant l'anode soluble 160.

Dans le mode de réalisation de l'installation d'étamage 1 selon l'invention qui est représentée sur la figure 3, l'anode 160 du réacteur 10 est constituée par des granulats d'étain 161 contenus dans un panier 162 (dit « panier de dissolution d'étain »). Ce panier 162 rempli de granulats 161 est relié au pole positif (représenté par le symbole « + » sur la figure 3) d'une source de courant électrique (non représenté sur la figure 3), les granulats d'étain 161 jouant le rôle d'anode soluble. La cathode insoluble 120 du réacteur d'électrodissolution d'étain 10 est reliée au pole négatif représenté par (le symbole «-» sur la figure 3) de la même source de courant électrique.

Le mode de réalisation de l'installation d'électro-étamage 1 selon l'invention représenté sur la figure 4 ne diffère de celui représenté sur la figure 3 que par la forme de l'anode soluble 160 du réacteur d'électrodissolution d'étain 10. Dans ce mode de réalisation l'anode soluble d'étain 160 est une anode massive.

Dans les installations d'électro-étamage 1 représentées sur les figures 3 et 4, deux circuits de recirculation 300, 400 de l'électrolyte relient le bac d'électrodéposition 30 (ou bac de revêtement) au réacteur d'électrodissolution 10, comme suit :
- un premier circuit 400 relie le compartiment anodique 600 du bac de revêtement 30 à la zone cathodique 1200 du réacteur d'électrodissolution d'étain 10, et
- un deuxième circuit 300 relie le compartiment cathodique 200 du bac de revêtement 30 à la zone anodique 1200 du réacteur d'électrodissolution d'étain 10.

En fonctionnement, lorsqu'on applique une différence de potentiel entre les électrodes 20, 60 plongeant dans le bac de revêtement 30, les ions stanneux Sn²⁺ présents dans l'électrolyte sous forme du composé SnA₂ se déposent sur la bande à revêtir 20 selon la réaction :

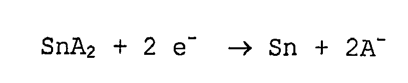

On observe en parallèle à l'anode la réaction suivante :

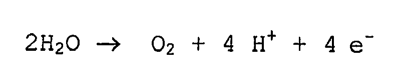

Les ions A⁻ qui sont libérés dans le compartiment cathodique 200 du bac de revêtement 30 traversent la membrane anionique 40 sous l'effet du champ électrique crée par la différence de potentiel.

De même que dans le bac de revêtement, on applique simultanément une différence de potentiel entre les électrodes 120, 160 du réacteur d'électrodissolution d'étain 10, ce qui conduit à la dissolution électrolytique de l'anode soluble 60 selon la réaction :

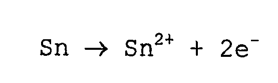

En parallèle, on observe à la cathode du réacteur 10 la réaction suivante :

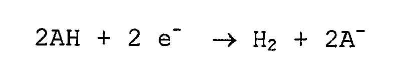

Les ions A⁻ libérés à la cathode du réacteur 10 transitent de la zone cathodique 1200 vers la zone anodique 1600 sous l'effet du champ électrique, ce qui conduit à la formation du composé SnA₂ dans cette zone 1600.

Pour éviter l'enrichissement de l'électrolyte en acide AH dans le compartiment anodique 600 du bac de revêtement 30, une partie de l'électrolyte est mis en recirculation entre le compartiment anodique 600 du bac 30 et la zone cathodique 1200 du réacteur 10, consommatrice d'acide AH.

De même, pour éviter l'appauvrissement de l'électrolyte en ions stanneux Sn²⁺ dans le compartiment cathodique 200 du bac 30, une partie de l'électrolyte est mis en recirculation entre le compartiment cathodique 200 du bac 30 et la zone anodique 1600 du réacteur 10, génératrice d'ions stanneux Sn²⁺.

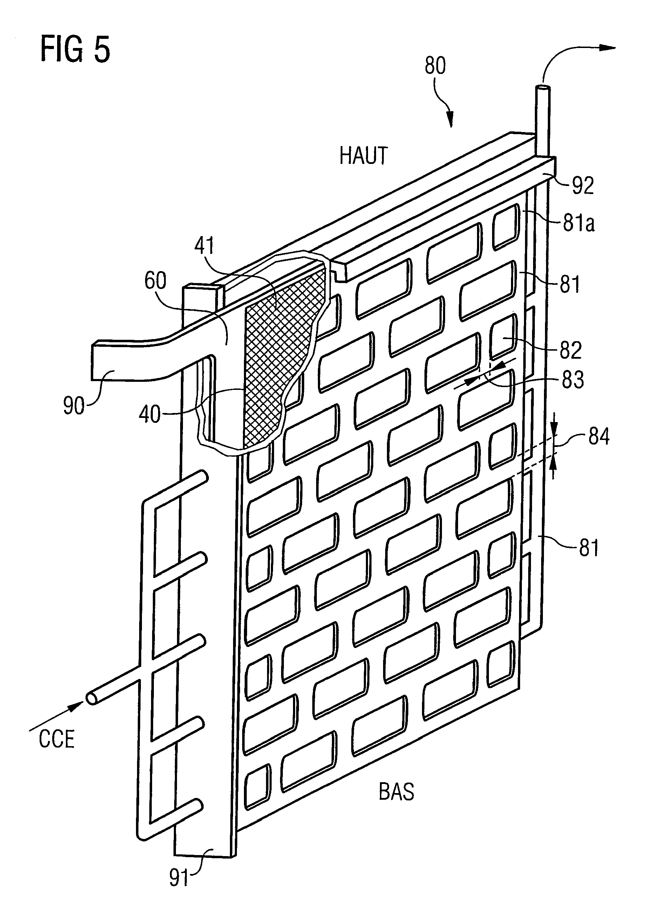

Sur la figure 5, est représenté un premier exemple de module de récupération 80 selon l'invention, qui intègre à la fois une membrane anionique 40 et une anode insoluble 60. Le module 80 représenté sur la figure 5 se présente sous forme d'une cassette plate 80 avec deux faces principales 81, 81a, dont au moins une face 81a, dite « face active », est pourvue d'une membrane anionique 40 retenue par un filet de rigidité 41 ou treillis. Une anode insoluble 60 est incluse dans la cassette 80, derrière la membrane anionique 40. Cette cassette 80 est destinée à être immergée dans l'électrolyte contenu dans le bac de revêtement 30.

Dans le mode de réalisation du module de récupération 80 selon l'invention représenté sur la figure 5, la face active 81a est percée d'une pluralité d'ouvertures 82, qui sont par exemple alignées horizontalement tout en étant en quinconce dans la direction verticale. Toutefois, on peut également prévoir une cassette 80 avec une face active 81 complètement ouverte (mode de réalisation non représenté).

Avantageusement, la distance horizontale 83 entre deux ouvertures 82 est au plus égale au tiers de leur largeur et leur distance verticale 84 est au plus égale à la moitié de leur hauteur. Ces ouvertures 82 permettent d'assurer les transferts ioniques par l'intermédiaire de la membrane anionique.

L'anode 60 est reliée, en partie supérieure de la cassette 80, à au moins une cosse d'alimentation en courant électrique 90.

Les cassettes 80 sont conçues pour être extraites latéralement des bacs de revêtement 30. Elles sont donc équipées de brides de fixation 91 coopérant avec d'autres brides d'assemblage équipant les bacs pour assurer leur fixation (non représentées). Un dispositif à ouverture et fermeture rapide assure l'arrimage des brides 91 des cassettes 80 avec les brides des bacs et un joint assure l'étanchéité entre ces brides. La cassette 80 est également pourvue d'un élément de glissement 92 pouvant coopérer avec un dispositif de guidage interne au bac de revêtement 30 (non représenté) pour assurer le guidage de la cassette 80 lors de son extraction du bac 30 ou de son introduction ce bac, ainsi que pour la maintenir en place en service. Cet élément de glissement 92 peut, par exemple, être constitué d'un rail ou d'un patin de glissement en PTFE.

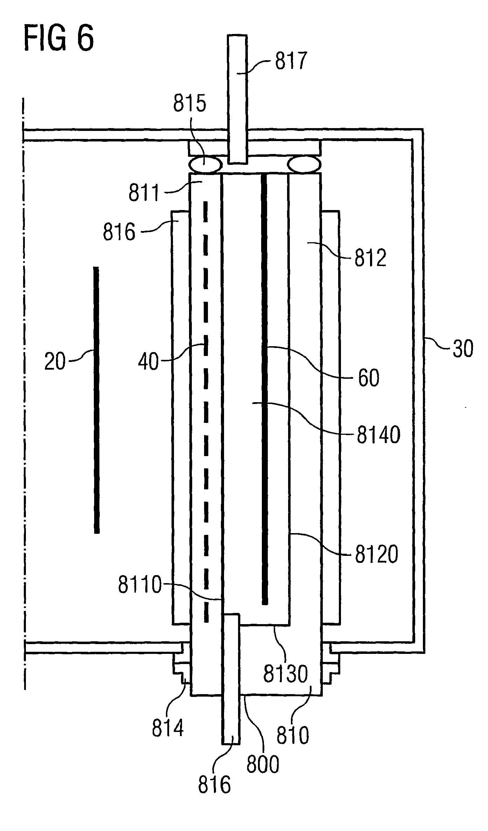

Sur la figure 6, est représenté un deuxième exemple de module de récupération selon l'invention 800, disposé dans un bac d'électrodéposition 30. Ce module de récupération ne comporte qu'une membrane anionique 40 et est complètement indépendant de l'anode insoluble 60.

Le module de récupération 800 comporte un châssis 810 se présentant sous forme d'un U comportant deux branches 811, 812, l'une de ces branches 811 étant pourvue de la membrane anionique 40 (« branche active »). Ce module de récupération 800 est disposé dans le bac de revêtement 30 de manière que:
- d'une part, les deux branches 811, 812 soient placées verticalement le long de la bande 20 à revêtir, la branche 811 contenant la membrane 40 étant disposée en vis-à-vis de la bande 20, et
- d'autre part, les deux branches 811, 812 entourent l'anode insoluble 60 par ses deux faces latérales 8110, 8120, une face longitudinale 8130 et une face de fond 8140.

L'anode insoluble 60 dispose de ses propres moyens de supportage dans le bac d'électrodéposition 30. Cette disposition permet le démontage de la membrane 40 dans son châssis 800 sans avoir à démonter l'anode 60. Le module de récupération 800 est fixé au bac de revêtement 30 par des brides de fixation 814 d'un côté et s'appuie sur des dispositifs d'étanchéité et de fixation 815 sur le côté opposé. Il dispose également d'éléments de glissement 816 assurant son guidage lors de son extraction ou introduction ainsi que pour son maintien en place en service. Des tuyauteries d'entrée 817 et de sortie 818 assurent la circulation de l'électrolyte.

## Revendications

1. Procédé d'étamage électrolytique d'une bande d'acier (20) dans au moins un bac d'électrodéposition (30) rempli d'une solution électrolytique qui comprend un acide AH et des ions stanneux Sn²⁺ sous forme d'un composé SnA₂ avec A désignant un anion acide, le composé SnA₂ provenant d'un réacteur d'électrodissolution d'étain (10), ledit procédé d'étamage mettant en oeuvre une anode non soluble (60) et la bande métallique (20) constituant une cathode qui sont immergées dans la solution électrolytique et entre lesquelles on applique une différence de potentiel, **caractérisé en ce que** l'on maintient constante la concentration en acide AH dans la solution électrolytique du bac (30) en réalisant l'étape suivante :
a. on fournit un réacteur d'électrodissolution d'étain (10) qui comprend une cathode insoluble (120) et une anode d'étain (160), entre lesquelles on applique une différence de potentiel, l'anode d'étain (160) et la cathode insoluble (120) étant séparées par une membrane anionique d'électrodialyse ou d'électrolyse(140) qui définit une zone cathodique (1200) intégrant la cathode insoluble (120) et une zone anodique (1600) intégrant l'anode d'étain (160), le composé SnA₂ provenant de la zone anodique (1600) du réacteur d'électrodissolution d'étain (10);
et **caractérisé en ce que** la bande métallique est en défilement continu dans le bac d'électrodéposition (30) et les étapes suivante :
b. on dispose dans la solution électrolytique du bac d'électrodéposition (30) une membrane anionique (MA) entre la bande métallique (20) et l'anode insoluble (60), cette membrane anionique (40) étant comprise dans un module amovible de récupération d'acide au voisinage de l'anode insoluble et définissant un compartiment anodique (600) comprenant l'anode insoluble (60) et un compartiment cathodique (200) comprenant la bande métallique (20);
c. on met en circulation une partie de la solution électrolytique entre le compartiment anodique (600) du bac d'électrodéposition (30) et la zone cathodique (1200) du réacteur d'électrodissolution d'étain (10).

2. Procédé selon la revendication 1, **caractérisé en ce que** l'on maintient constante la concentration en ions stanneux Sn²⁺ dans la solution électrolytique du bac d'électrodéposition (30) par mise en circulation de la solution électrolytique entre le compartiment cathodique (200) du bac d'électrodéposition (30) et la zone anodique (1600) du réacteur d'électrodissolution d'étain (10).

3. Installation (1) pour l'étamage électrolytique d'une bande d'acier (2), ladite installation (1) comprenant :
■ au moins un bac d'électrodéposition (30) rempli d'une solution électrolytique qui comprend un acide AH et des ions stanneux Sn²⁺ sous forme d'un composé SnA₂ avec A désignant une fonction acide, ledit bac d'électrodéposition (30) comprenant une anode (60) insoluble immergée dans la solution électrolytique du bac d'électrodéposition (30) et une cathode (20) constituée par la bande métallique dans la solution électrolytique du bac d'électrodéposition (30), et
■ un réacteur d'électrodissolution d'étain (10),
■ le réacteur d'électrodissolution d'étain (10) comprend une cathode insoluble (120) et une anode d'étain soluble (160), l'anode d'étain (160) et la cathode insoluble (120) étant séparées par une membrane anionique d'électrodialyse ou d'électrolyse (140) définissant une zone cathodique (1200) intégrant la cathode (120) et une zone anodique (1600) intégrant l'anode d'étain (160), et
**caractérisée en ce que** :
■ la bande est en défilement continu dans le bac d'électrodéposition (30);
■ le bac d'électrodéposition (30) comprend en outre une membrane anionique (40) disposée dans la solution électrolytique (30) du bac d'électrodéposition (30) entre la bande métallique (20) et l'anode insoluble (60), étant comprise dans un module amovible de récupération d'acide au voisinage de l'anode insoluble et définissant un compartiment anodique (600) comprenant l'anode insoluble (60) et un compartiment cathodique (200) comprenant la bande métallique (20),
■ ladite installation d'étamage (1) comprend en outre un circuit de recirculation (400) de la solution électrolytique entre le compartiment anodique (600) du bac d'électrodéposition (30) et la zone cathodique (1200) du réacteur d'électrodissolution d'étain (10).

4. Installation (1) selon la revendication 3, **caractérisée en ce qu'**elle comprend en outre un second circuit (300) de recirculation de la solution électrolytique entre le compartiment cathodique (200) du bac d'électrodéposition (30)et la zone anodique (1600) du réacteur d'électrodissolution d'étain (10).

5. Installation selon la revendication 3 ou 4, **caractérisée en ce que** la membrane anionique (40) et l'anode insoluble (60) sont intégrées dans un module de récupération (8).

6. Installation selon la revendication 3 ou 4, **caractérisée en ce que** la membrane anionique (40) est intégrée dans un module (80, 800) amovible comprenant une membrane anionique (40) et un châssis pour supporter ladite membrane (40), ledit châssis étant réalisé en un matériau non conducteur de l'électricité.

7. Installation selon la revendication 6, **caractérisé en ce que** le module (80, 800) intègre également une anode (60), et **en ce qu'**il se présente sous forme d'une cassette plate comprenant:
■ la membrane anionique (40) et l'anode (60) qui se présentent sous forme de feuilles, et
■ deux faces principales (81, 81a), l'une de ces faces (81a) étant une face active munie de ladite membrane anionique (40),
l'anode (60) étant disposée dans la cassette (80) derrière la membrane anionique (40).

8. Installation selon la revendication 6, **caractérisé en ce que** la membrane anionique (40) du module (80, 800) est maintenue dans le châssis par un treillis (41).

9. Installation selon l'une quelconque des revendications 6 à 8, **caractérisé en ce qu'**une ou plusieurs ouvertures (82) sont formées dans le châssis du module (80, 800) au niveau de la face active (81).

10. Installation selon la revendication 7, **caractérisé en ce que** la membrane anionique (40) du module (80, 800) se présente sous forme d'une feuille et le châssis se présente sous forme d'un U avec deux branches (811, 812), la membrane anionique (40) étant intégrée dans l'une des branches(811).

## Claims

1. Method for the electrolytic tinning of a steel strip (20) in at least one electrodeposition tank (30) containing an electrolytic solution which comprises an acid AH and Sn²⁺ stannous ions in the form of an SnA₂ compound with A designating an acid anion, said SnA₂ compound originating from a tin electrodissolution reactor (10), said tinning method implementing a non-soluble anode (60) and the metal strip (20) comprising a cathode which are immersed in the electrolytic solution and between which a potential difference is applied, **characterised in that** the acid AH concentration in the electrolytic solution of the tank (30) is kept constant by carrying out the following step:
a. a tin electrodissolution reactor (10) is provided which comprises an insoluble cathode (120) and a tin anode (160), between which a potential difference is applied, the tin anode (160) and the insoluble cathode (120) being separated by an electrodialysis or electrolysis anionic membrane (140) which defines a cathodic zone (1200) incorporating the insoluble cathode (120) and an anodic zone (1600) incorporating the tin anode (160), said SnA₂ compound originating from the anodic zone (1600) of the tin electrodissolution reactor (10);
and **characterised in that** the metal strip is continuously moving in the electrodeposition tank (30)
and the following steps:
b.arranged in the electrolytic solution of the electrodeposition tank (30) is an anionic membrane (MA) between the metal strip (20) and the insoluble anode (60), said anionic membrane (40) forming part of a removable module for recovery of acid in the proximity of the insoluble anode and defining an anodic compartment (600) comprising the insoluble anode (60) and a cathodic compartment (200) comprising the metal strip (20);
c. some of the electrolytic solution is put into circulation between the anodic compartment (600) of the electrodeposition tank (30) and the cathodic zone (1200) of the tin electrodissolution reactor (10).

2. Method according to claim 1, **characterised in that** the concentration of stannous ions Sn²⁺ in the electrolytic solution of the electrodeposition tank (30) is kept constant by circulating the electrolytic solution between the cathodic compartment (200) of the electrodeposition tank (30) and the anodic zone (1600) of the tin electrodissolution reactor (10).

3. Installation (1) for the electrolytic tinning of a steel strip (2), said installation (1) comprising
• at least one electrodeposition tank (30) containing an electrolytic solution which comprises an acid AH and stannous ions Sn²⁺ in the form of an SnA₂ compound with A designating an acid function, said electrodeposition tank (30) comprising an insoluble anode (60) immersed in the electrolytic solution of the electrodeposition tank (30) and a cathode (20) comprising the metal strip in the electrolytic solution of the electrodeposition tank (30), and
• a tin electrodissolution reactor (10),
• the tin electrodissolution reactor (10) comprises an insoluble cathode (120) and a soluble tin anode (160), the tin anode (160) and the insoluble cathode (120) being separated by an anionic electrodialysis or electrolysis membrane (140) defining a cathodic zone (1200) incorporating the cathode (120) and an anodic zone (1600) incorporating the tin anode (160) **characterised in that**:
• the strip is continuously moving in the electrodeposition tank (30);
• the electrodeposition tank (30) comprises furthermore an anionic membrane (40) arranged in the electrolytic solution (30) of the electrodeposition tank (30) between the metal strip (20) and the insoluble anode (60), said anionic membrane forming part of a removable module for the recovery of acid in the proximity of the insoluble anode and defining an anodic compartment (600) comprising the insoluble anode (60) and a cathodic compartment (200) comprising the metal strip (20),
• said tinning installation (1) comprises furthermore a recirculation circuit (400) of the electrolytic solution between the anodic compartment (600) of the electrodeposition tank (30) and the cathodic zone (1200) of the tin electrodissolution reactor (10).

4. Installation (1) according to claim 3, **characterised in that** it comprises furthermore a second recirculation circuit (300) of the electrolytic solution between the cathodic compartment (200) of the electrodeposition tank (30) and the anodic zone (1600) of the tin electrodissolution reactor (10).

5. Installation according to claim 3 or 4, **characterised in that** the anionic membrane (40) and the insoluble anode (60) are incorporated within a recovery module (8).

6. Installation according to claim 3 or 4, **characterised in that** the anionic membrane (40) is incorporated within a removable module (80, 800) comprising an anionic membrane (40) and a frame to support said membrane (40), said frame being realised in an electrically non-conductive material.

7. Installation according to claim 6, **characterised in that** the module (80, 800) also incorporates an anode (60) and **in that** it is embodied in the form of a flat cartridge comprising:
• the anionic membrane (40) and the anode (60) which are embodied in the form of sheets, and
• two main faces (81, 81a), one of said faces being an active face equipped with said anionic membrane (40),
the anode (60) being arranged in the cartridge (80) behind the anionic membrane (40).

8. Installation according to claim 6, **characterised in that** the anionic membrane (40) of the module (80, 800) is held in the frame by a mesh (41).

9. Installation according to one of claims 6 to 8, **characterised in that** one or more openings (82) are formed in the frame of the module (80, 800) at the level of the active face (81).

10. Installation according to claim 7, **characterised in that** the anionic membrane (40) of the module (80, 800) is embodied in the form of a sheet and the frame in the form of a U with two branches (811, 812), the anionic membrane (40) being incorporated within one of the branches (811).

## Patentansprüche

1. Verfahren zur elektrolytischen Verzinnung eines Stahlbandes (20) in mindestens einem Behälter zur elektrolytischen Abscheidung, der mit einer Elektrolytlösung gefüllt ist, welche eine Säure AH und Zinnionen Sn²⁺ in Form einer Verbindung SnA₂ enthält, in der A ein Säureanion bezeichnet, wobei die Verbindung SnA₂ aus einem Reaktor zur elektrolytischen Zersetzung von Zinn (10) kommt, wobei dieses Verzinnungsverfahren eine nicht lösliche Anode (60) einsetzt und das Metallband (20) eine Kathode darstellt, die in die Elektrolytlösung eintauchen und zwischen denen eine Potenzialdifferenz angelegt wird, **dadurch gekennzeichnet, dass** die Konzentration der Säure AH in der Elektrolytlösung des Behälters (30) konstant gehalten wird, indem der folgende Schritt ausgeführt wird:
a. es wird ein Reaktor zur elektrolytischen Zersetzung von Zinn (10) bereitgestellt, der eine unlösliche Kathode (120) und eine Zinnanode (160) umfasst, zwischen denen eine Potenzialdifferenz angelegt wird, wobei die Zinnanode (160) und die unlösliche Kathode (120) durch eine anionische Elektrodialyse- oder Elektrolysemembran (140) getrennt sind, die einen kathodischen Bereich (1200) mit der unlöslichen Kathode (120) und einen anodischen Bereich (1600) mit der löslichen Zinnanode (160) begrenzt, wobei die Verbindung SnA₂ aus dem anodischen Bereich (1600) des Reaktors zur elektrolytischen Zersetzung von Zinn (10) kommt;
und **dadurch gekennzeichnet, dass** das Metallband kontinuierlich in dem Behälter zur elektrolytischen Abscheidung (30) durchläuft und die folgenden Schritte ausgeführt werden:
b. in der Elektrolytlösung des Behälters zur elektrolytischen Abscheidung (30) wird eine anionische Membran (MA) zwischen dem Metallband (20) und der unlöslichen Anode (60) angeordnet, wobei diese anionische Membran (40) in einem entnehmbaren Modul zur Rückführung von Säure in der Nähe der unlöslichen Anode angeordnet ist und einen anodischen Raum (600) mit der unlöslichen Anode (60) und einen kathodischen Raum (200) mit dem Metallband (20) begrenzt;
c. ein Teil der Elektrolytlösung wird zwischen dem anodischen Raum (600) des Behälters zur elektrolytischen Abscheidung (30) und dem kathodischen Bereich (1200) des Reaktors zur elektrolytischen Zersetzung von Zinn (10) in Zirkulation versetzt.

2. Verfahren nach Anspruch 1, **dadurch gekennzeichnet, dass** die Konzentration an Zinnionen Sn²⁺ in der Elektrolytlösung des Behälters zur elektrolytischen Abscheidung (30) konstant gehalten wird, indem die Elektrolytlösung zwischen dem kathodischen Raum (200) des Behälters zur elektrolytischen Abscheidung (30) und dem anodischen Bereich (1600) des Reaktors zur elektrolytischen Zersetzung von Zinn (10) in Zirkulation versetzt wird.

3. Einheit (1) zur elektrolytischen Verzinnung eines Stahlbandes (2), wobei diese Einheit (1) umfasst:
■ mindestens einen Behälter zur elektrolytischen Abscheidung (30), der mit einer Elektrolytlösung gefüllt ist, die eine Säure AH und Zinnionen Sn²⁺ in Form einer Verbindung SnA₂ enthält, in der A eine Säurefunktion bezeichnet, wobei dieser Behälter zur elektrolytischen Abscheidung (30) eine unlösliche Anode (60) umfasst, die in die Elektrolytlösung des Behälters zur elektrolytischen Abscheidung (30) eintaucht, und eine Kathode (20), die aus dem Metallband in der Elektrolytlösung des Behälters zur elektrolytischen Abscheidung (30) besteht, und
■ einen Reaktor zur elektrolytischen Zersetzung von Zinn (10),
■ wobei der Reaktor zur elektrolytischen Zersetzung von Zinn (10) eine unlösliche Kathode (120) und eine lösliche Zinnanode (160) umfasst, wobei die Zinnanode (160) und die unlösliche Kathode (120) durch eine anionische Elektrodialyse- oder Elektrolysemembran (140) getrennt sind, die einen kathodischen Bereich (1200) mit der Kathode (120) und einen anodischen Bereich (1600) mit der Zinnanode (160) begrenzt, und
**dadurch gekennzeichnet ist, dass**:
■ das Band in dem Behälter zur elektrolytischen Abscheidung (30) kontinuierlich durchläuft;
■ der Behälter zur elektrolytischen Abscheidung (30) darüber hinaus eine anionische Membran (40) umfasst, die in der Elektrolytlösung des Behälters zur elektrolytischen Abscheidung (30) zwischen dem Metallband (20) und der unlöslichen Anode (60) angeordnet ist, in einem entnehmbaren Modul zur Rückführung von Säure in der Nähe der unlöslichen Anode enthalten ist und einen anodischen Raum (600) mit der unlöslichen Anode (60) und einen kathodischen Raum (200) mit dem Metallband (20) begrenzt,
■ wobei die besagte Verzinnungseinheit (1) weiterhin einen Rezirkulationskreis (400) für die Elektrolytlösung zwischen dem anodischen Raum (600) des Behälters zur elektrolytischen Abscheidung (30) und dem kathodischen Bereich (1200) des Reaktors zur elektrolytischen Zersetzung von Zinn (10) umfasst.

4. Einheit (1) nach Anspruch 3, **dadurch gekennzeichnet, dass** sie weiterhin einen zweiten Rezirkulationskreis (300) für die Elektrolytlösung zwischen dem anodischen Raum (200) des Behälters zur elektrolytischen Abscheidung (30) und dem kathodischen Bereich (1600) des Reaktors zur elektrolytischen Zersetzung von Zinn (10) umfasst.

5. Einheit nach Anspruch 3 oder 4, **dadurch gekennzeichnet, dass** die anionische Membran (40) und die unlösliche Kathode (60) in ein Rückführungsmodul (8) integriert sind.

6. Einheit nach Anspruch 3 oder 4, **dadurch gekennzeichnet, dass** die anionische Membran (40) in ein entnehmbares Modul (80, 800) integriert ist, das eine anionische Membran (40) und einen Rahmen zum Halten dieser Membran (40) umfasst, wobei dieser Rahmen aus einem elektrisch nicht leitenden Material besteht.

7. Einheit nach Anspruch 6, **dadurch gekennzeichnet, dass** das Modul (80, 800) auch eine Anode (60) beinhaltet und dass es in Form einer flachen Kassette vorliegt, die Folgendes umfasst:
■ die anionische Membran (40) und die Anode (60), die in Form von Folien vorliegen, und
■ zwei Hauptflächen (81, 81a), wobei eine dieser Flächen (81a) eine aktive Fläche ist, die mit dieser anionischen Membran (40) versehen ist,
wobei die Anode (60) in der Kassette (80) hinter der anionischen Membran (40) angeordnet ist.

8. Einheit nach Anspruch 6, **dadurch gekennzeichnet, dass** die anionische Membran (40) des Moduls (80, 800) in dem Rahmen durch ein Gittergeflecht (41) gehalten wird.

9. Einheit nach einem beliebigen der Ansprüche 6 bis 8,
**dadurch gekennzeichnet, dass** eine oder mehrere Öffnungen (82) im Rahmen des Moduls (80, 800) an der aktiven Fläche (81) ausgebildet sind.

10. Einheit nach Anspruch 7, **dadurch gekennzeichnet, dass** die anionische Membran (40) des Moduls (80, 800) in Form einer Folie vorliegt und der Rahmen in Form eines U mit zwei Schenkeln (811, 812) vorliegt, wobei die anionische Membran (40) in einen dieser Schenkel (811) integriert ist.
